# EUROPEAN PATENT SPECIFICATION

(11) **EP 3 847 334 B1**
(45) Date of publication and mention of the grant of the patent: **11.06.2025**
(21) Application number: 19768917.7
(22) Date of filing: 03.09.2019
(51) Int. Cl.: E06B 3/22

(54) **TAGS HAVING SMART CHIPS HIDDEN IN WINDOW AND DOOR FRAMES AND ASSOCIATED METHODS**
ETIKETTEN MIT IN FENSTER- UND TÜRRAHMEN VERBORGENEN INTELLIGENTEN CHIPS UND ZUGEHÖRIGE VERFAHREN
ÉTIQUETTES DOTÉES DE PUCES INTELLIGENTES DISSIMULÉES DANS DES CADRES DE FENÊTRES ET DE PORTES ET PROCÉDÉS ASSOCIÉS

(30) Priority: 07.09.2018 US 201816124235
(43) Date of publication of application: 14.07.2021
(73) Proprietor: Digital Building Solutions GmbH, 48324 Sendenhorst (DE)
(72) Inventor: HEITMAR, Pascal, 33334 Gütersloh (DE)
(74) Representative: Cohausz Hannig Borkowski Wißgott
(86) International application number: PCT/IB2019/057420
(87) International publication number: WO 2020/049461

(56) References cited:
- FR-A1- 2 956 504
- NL-C2- 2 005 129

## Description

### BACKGROUND OF THE INVENTION

### 1. Field of the Invention

The present invention relates to windows and doors which have tags provide with smart chips hidden within their frames. The smart chips contain information relating to the respective windows and doors which may be addressed through appropriate cooperating electronic equipment operatively associated with the smart tag and associated methods. More specifically, the smart tag may contain a wide variety of information related to the fabrication, installation and user desired information.

### 2. Description of the Prior Art

Under prior practices, information provided to the installer and end user was generally provided in hard copy, such as in paper form, and was limited as to content. One of the difficulties with such prior art practices is that there was the need to file the documentation as to each window in a safe storage place with reasonable retrieval of the same. Often, such paper materials were inadvertently discarded, lost or destroyed. Even when they were not destroyed, they presented the need to be involved with cumbersome, unreliable information storage and retrieval systems.

Such prior practices often involved an identification label placed on the exterior of a portion of the frame of the window or door, but this provided little or no helpful information. Prior art documents NL C 2005129 and FR2956504 show the use of smart tags in frames.

There remains, therefore, a very real and substantial need for providing enhanced information for storage and/or retrieval by, in an efficient, economically practical manner by multiple levels of people involved with the specific window or door.

The present invention has met the above described need.

### SUMMARY OF THE INVENTION

The present invention has provided a hidden tag having a smart chip which is not visible to the naked eye from the exterior of the window frame or door frame. Information contained on the smart chip may be obtained through authorized means such as a suitable app on a cell phone which is held in close proximity to the location where the tag is concealed and secured to the interior of the frame.

The chip is capable of providing huge amounts of information which may be stored digitally on the smart chip and retrieved by authorized individuals using apps which will communicate with the smart chip. The information may include multiple tiers of users such as the fabricator providing detailed window or door identification and specifications for the specific window or door, installation guidance for use by the window or door installers, warranty and other information of interest to the end user of the specific window or door.

The window or door frame preferably has indicia provided on the exterior of the frame facing the interior of the building in which it is installed so as to inform one seeking to access the information contained on the smart chip precisely where to position the equipment outside of the frame, such as a cell phone, in accessing the information. In general, such devices will be held very close to the frame.

The information is generally accessible from the frame interior which contains the hidden smart chip and back through the frame to the exterior thereof.

The frame or frame portion adjacent the smart chip will be composed of a material which will permit radio frequency communication therethrough. It may, for example, be composed of a vinyl extrusion, such as polyvinyl chloride.

The fabricator of the window or door would normally program the original software and, if desired, the installer may be provided with limited ability to add to the data in the field.

An RFID (radio frequency identification) chip may be employed advantageously in the system. The preferred chip is an NFC chip (near-field communication chip).

It is an object of the present invention to provide an efficient means for securely providing and accessing information regarding a door or window with a hidden smart chip with authorized access being to multiple levels of commerce.

It is another object of the present invention to provide such a system wherein the fabricator of the window or door may provide in digital form on the smart chip secured to a tag, substantial amounts of information which may be accessed and, in some instances, added to by the window or door installer and may be readily accessed by the user of the window or door.

It is a further object of the present invention which eliminates numerous disadvantages of the prior hard copy storage or label information by providing enhanced security and more extensive information readily accessible at several levels.

It is another object of the present invention to provide such a system which employs a hidden intelligent radio chip stored securely within a frame of a door or window while preserving ready communication access by authorized individuals from the frame exterior.

It is another object of the present invention to provide a system which facilitates rapid access to data stored on an embedded smart chip disposed within a window and door in a manner which permits downloading of important information in a rapid manner.

It is a further object of the present invention to provide embedded intelligence within a window or door frame through the use of an integrated radio chip which can receive and store data and communicate the same through an authorized external piece of equipment such as a smart phone, for example.

These and other objects of the invention will be apparent to those skilled in the art upon reference to the drawings appended hereto.

### BRIEF DESCRIPTION OF THE DRAWINGS

Figure 1 shows schematically a form of single hung window as viewed from the interior of a building. The letters "AB" can be a logo or other indicia which will advise people where to seek information as that is where the hidden tag containing the smart chip is located.
Figure 2 is an elevational view showing a tag which has a smart chip.
Figure 3 is an exploded perspective view showing a window sill in combination with the frame which receives the window and a glazing bead for securing the exterior of the insulated glass (not shown in that view).
Figure 4 is an exploded perspective view showing the structure of Figure 3 with the tag having a smart chip.
Figure 5 is a cross-sectional exploded view showing the tag and the overlying insulated glass glazing bead and the structure which will house the tag.
Figure 6 is a side elevational view of Figure 4 showing the tag 16 before insertion into the window frame.
Figure 7 is a left side elevational view of Figure 5.
Figure 8 is a bottom plan view of Figure 5.
Figure 9 is a top plan view of Figure 5.
Figure 10 is a figure similar to Figure 5, but shows the tag embedded within the sill and the insulated glass glazing in its final sill position.

### DESCRIPTION OF THE PREFERRED EMBODIMENTS

As employed herein, the term "smart chip" will refer to a chip which is capable of storing digital information of value to multiple levels of those involved in the fabrication, installation and end users of windows and doors with this being accomplished by storage of data on the smart chip and permitting access thereto by an external device such as a smart phone having access thereto through an appropriate app. Among the chips which may be employed are RFID chips with the preferred smart chip being an NFC chip.

By way of example, the fabricator of the window may, for example, store on the smart chip information regarding the specification for the particular window including profile, fittings, glass, dimensions, and type of window, as well as other documentation such as test certificates, warranty information, fire protection certificates, U-value calculations and installation procedures. The installer will, through the installer app, be provided with the detailed window information and installation details and, in some instances, may have the opportunity to add information to the smart chip. The customer/end user will be provided with detailed information regarding the specific window and can readily download the desired information by employing the appropriate window app.

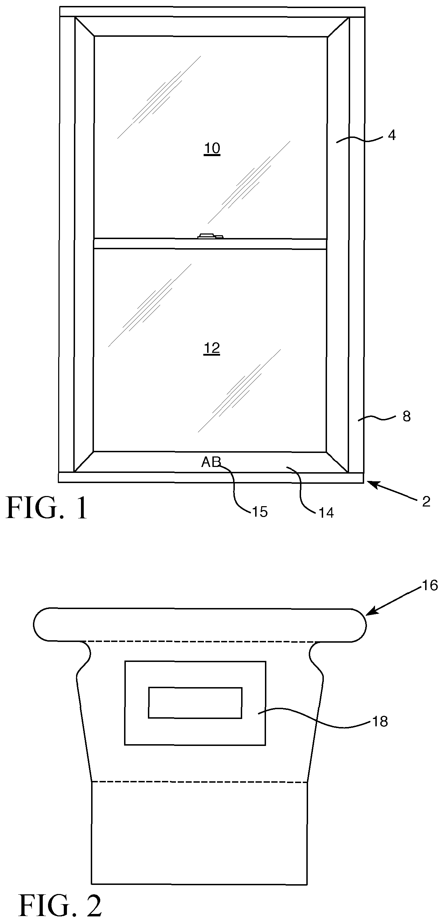

Referring to Figure 1, there is shown a window construction to schematically a single hung window which has a window frame 4 which is secured to a building secured frame 8. Glass panes 10 and 12 are secured to frame 4. The sill portion 14 of the window frame 4 contains the embedded smart chip of the present invention. A logo or other identifying material such as represented by the letters AB at 15 identify for those who are going to access the smart chip at the specific location of the chip. In general, the smart phone or other suitable device normally will be placed about 0.50 inch (1.27cm) from the frame in order to get effective communication with the chip.

Referring to Figure 2, there is shown an example of a tag 16 which has secured to it a smart chip 18.

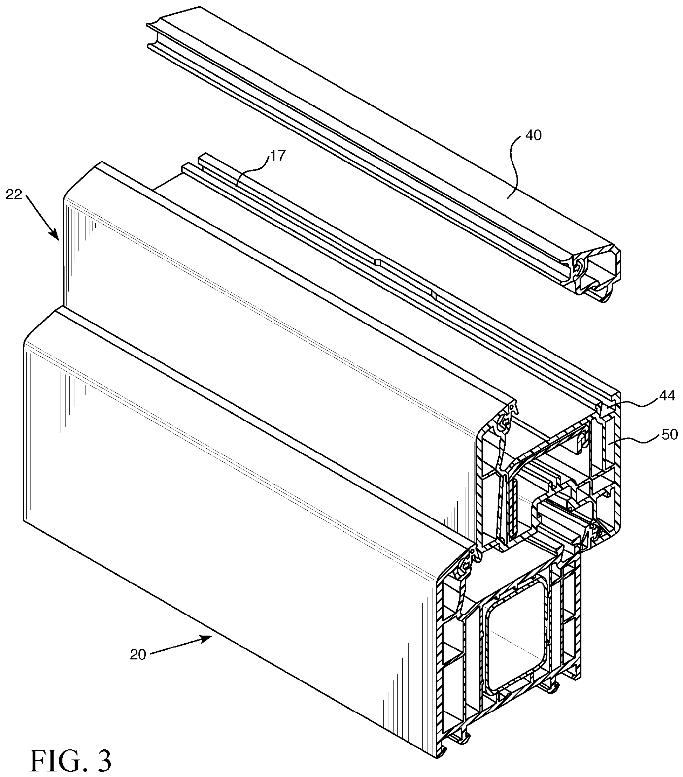

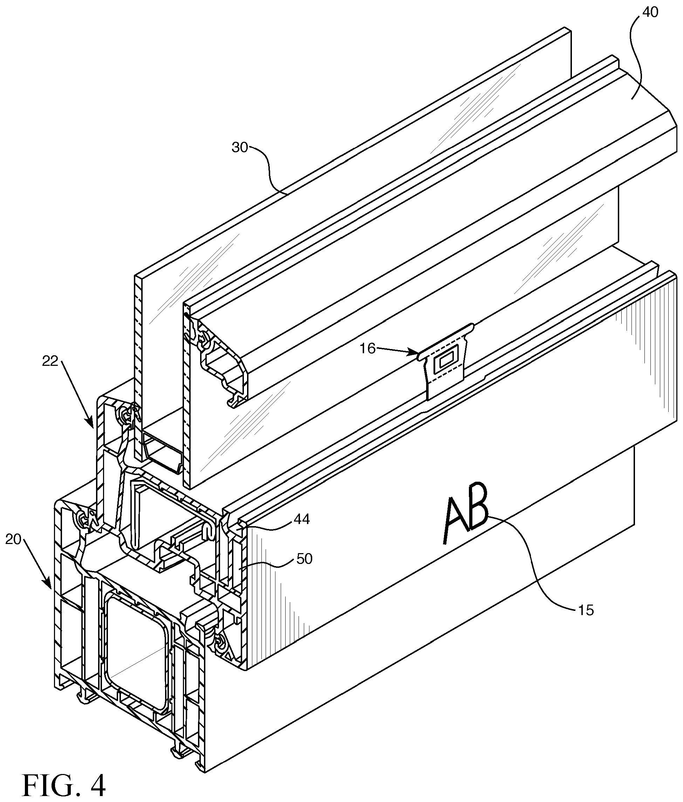

As shown in the exploded views of Figures 3 and 4, a frame 20 has secured to it a window frame 22 which will be operatively associated with glazing bead 40 when the assembly is completed. For clarity of illustration, neither the tag nor the insulated glass window is shown in Figure 3. An upwardly channel 44 is provided within window frame 22. As shown in Figure 4, when the smart chip 16 is lowered into the frame 22 through an opening in channel 44 and into tag receiving opening 50 wherein it is securely positioned. The tag be hidden from view outside of the frame and be positioned adjacent to identifying indicia 15. When assembled, the glazing bead 40 will move downward to secure and seal the insulated window 30 in place. It will be appreciated that while a preferred use of the smart chip containing tag as disclosed herein shows it secured in a hidden manner, in the sill, it will be appreciated that it may be provided in other portions of a window frame or door frame.

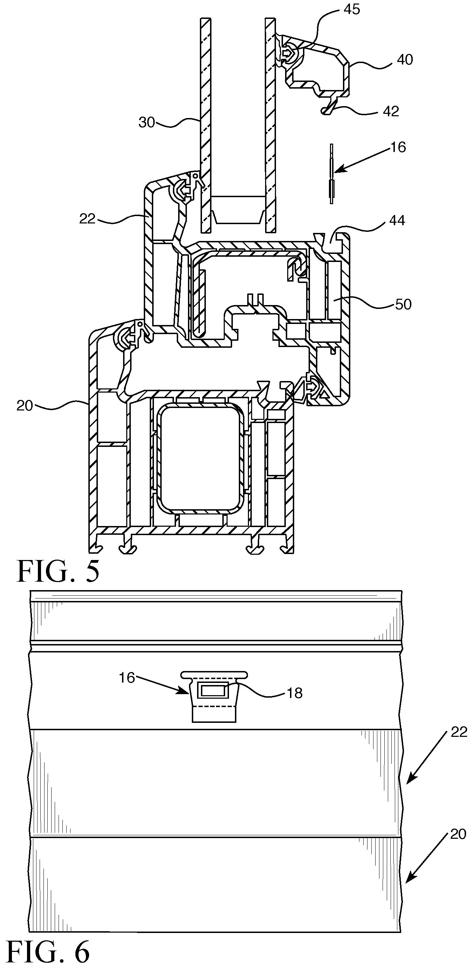

Figure 5 shows a cross-sectional view in elevation of the exploded assembly. When assembly is completed, smart chip 16 will be received within opening 50 and will underlie the glazing bead 40 which will have moved downwardly such that projection 42 is mechanically secured within channel 44 and seal 45 is against the lower portion of the insulated window 30.

Referring to Figure 6, there is shown the front elevational view with the tag 16 containing the smart chip 18 before it has been moved downward to its storage position within frame portion 22.

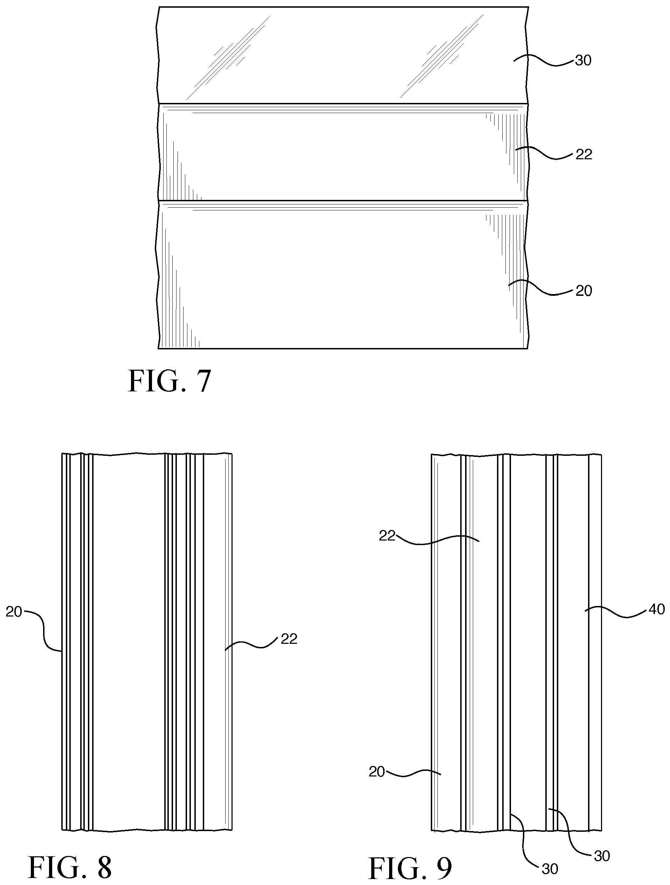

Figure 7 is a left side elevational view of Figure 5 showing the insulated glass 30, the frame 22 and adjacent frame member 20.

Figures 8 is a bottom plan view of Figure 5 showing the underside of the frames 22.

Figure 9 is a top plan view of Figure 5 showing the insulated window 30 along with frame 22 and adjacent frame 40.

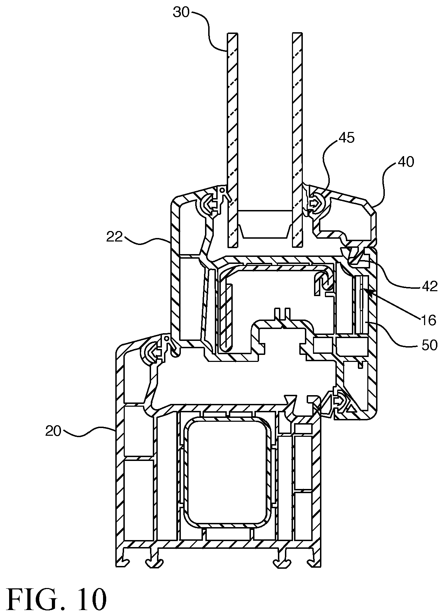

Figure 10 shows the previously disclosed exploded structure in its final preferred assembled state. It will be seen that the tag 16 has been received in recess in hollow 50 within frame 22 and is shielded from being visually accessible from the outside of frame 22. The axial location of tag 16 within the hollow 50 will be generally aligned with the outside indicia 15 (Fig. 4). This facilitates positioning a cell phone or other suitable device in close proximity to where the smart chip is located. In general, the smart phone or other device would be positioned about 0.50 inch (1.27cm) from the exterior surface of the frame 22.

Whereas particular embodiments of the invention have been disclosed herein for purposes of illustration, it will be appreciated by those skilled in the art that numerous variations of the details may be made without departing from the invention as defined in the appended claims.

## Claims

1. A frame (22) for a window or door comprising a panel (30) secured to said frame (22), a tag (16) having a smart chip (18) secured thereto said smart tag (16) being hidden from view from the exterior of said frame (22), **characterized in** said frame (22) having a tag receiving recess (50) defined within the interior of said frame (22) and the smart chip (18) being disposed within said recess (50), and said frame (22) having location indicia (15) visible from the exterior thereof and being disposed generally adjacent to said hidden smart chip (18), the frame (22) being operatively associated with a glazing bead (40) and provided with a channel (44) and the smart chip (18) being positioned into the tag receiving recess (50) through an opening in the channel (44) and underlying the glazing bead (40), the glazing bead (40) having a projection (42) being mechanically secured within the channel (44) and having a seal (45) being against the insulated window (30).

2. The frame (22) of claim 1 being a window frame (22) and said panel (30) having at least one glass pane (30).

3. The frame (22) of claim 1 including said smart chip (18) being selected from the group consisting of an NFC chip and a RFID.

4. The frame (22) of claim 3 including said chip (18) being an NFC chip.

5. The frame (22) of claim 4 including said NFC chip structured to receive and store data to be accessible for data retrieval from a plurality of sources.

6. The frame (22) of claim 5 including said NFC chip being structured to receive and store data from a fabricator and permit access to said data by an installer and an end user.

7. The frame (22) of claim 1 including said frame (22) being a door frame.

8. The frame (22) of claim 1 including said frame being an extruded frame (22).

9. The frame (22) of claim 8 including said frame (22) being composed of a material which permits radio frequency delivered information to pass therethrough.

10. The frame (22) of claim 9 including said frame (22) being composed of polyvinyl chloride.

11. A method for delivery of information about a specific window or door comprising providing a frame (22) with a panel (30) secured thereto, providing a tag (16) having a smart chip (18) secured thereto, providing said tag (16) within the interior of said frame (22) being hidden from view from the exterior of said frame (22), and delivering information in digital form to said smart chip (18) for storage therein and access thereto from the exterior of said frame (18) by a plurality of authorized individuals, **characterized in** providing the exterior of said frame (22) with location indicia (15) visible from the exterior of said frame (22) and being disposed generally adjacent to said hidden smart chip (18) and embedding the chip (18) into a tag receiving recess (50) in the interior of the frame (22) through an opening in a channel (44) of the frame (22) and moving a glazing bead (40) into the channel (44) such that a projection (42) of the glazing bead (40) is mechanically secured within the channel (44) and a seal (45) of the glazing bead (40) is against the insulated window (30)

12. The method of claim 11 including said information being provided to said chip (18) by a manufacturer of windows or doors, and said information being accessible to authorized installers and end users.

13. The method of claim 12 including permitting access to said smart chip (18) stored information by a cell phone which has an appropriate app.

14. The method of claim 11 including employing said method with a window or door having an extruded frame (22).

15. The method of claim 15 including employing said method with a window or door having a PVC frame (22).

## Patentansprüche

1. Rahmen (22) für ein Fenster oder eine Tür, umfassend eine Platte (30), die an dem Rahmen (22) befestigt ist, ein Tag (16) mit einem daran befestigten Smart-Chip (18), wobei das Smart-Tag (16) von der Außenseite des Rahmens (22) nicht sichtbar ist, **dadurch gekennzeichnet, dass** der Rahmen (22) eine Tag-Aufnahmevertiefung (50) aufweist, die im Inneren des Rahmens (22) definiert ist, und der Smart-Chip (18) innerhalb der Vertiefung (50) angeordnet ist, und wobei der Rahmen (22) Positionszeichen (15) aufweist, die von der Außenseite davon sichtbar sind und allgemein benachbart zu dem verborgenen Smart-Chip (18) angeordnet sind, wobei der Rahmen (22) mit einer Glasleiste (40) wirkverbunden ist und mit einem Kanal (44) versehen ist und der Smart-Chip (18) durch eine Öffnung in dem Kanal (44) und unter der Glasleiste (40) in der Tag-Aufnahmevertiefung (50) positioniert ist, wobei die Glasleiste (40) einen Vorsprung (42) aufweist, der mechanisch in dem Kanal (44) befestigt ist und eine Dichtung (45) aufweist, die gegen das isolierte Fenster (30) anliegt.

2. Rahmen (22) nach Anspruch 1, bei dem es sich um einen Fensterrahmen (22) handelt und wobei die Platte (30) mindestens eine Glasscheibe (30) aufweist.

3. Rahmen (22) nach Anspruch 1, wobei der Smart-Chip (18) aus der aus einem NFC-Chip und einem RFID-Chip bestehenden Gruppe ausgewählt ist.

4. Rahmen (22) nach Anspruch 3, wobei es sich bei dem Chip (18) um einen NFC-Chip handelt.

5. Rahmen (22) nach Anspruch 4, wobei der NFC-Chip dahingehend strukturiert ist, Daten zu empfangen und zu speichern, auf die zum Datenabruf von mehreren Quellen zugegriffen werden soll.

6. Rahmen (22) nach Anspruch 5, wobei der NFC-Chip dahingehend strukturiert ist, Daten von einem Hersteller zu empfangen und zu speichern und Zugriff auf die Daten durch einen Installateur und einen Endnutzer zu ermöglichen.

7. Rahmen (22) nach Anspruch 1, wobei der Rahmen (22) ein Türrahmen ist.

8. Rahmen (22) nach Anspruch 1, wobei der Rahmen ein extrudierter Rahmen (22) ist.

9. Rahmen (22) nach Anspruch 8, wobei der Rahmen (22) aus einem Material zusammengesetzt ist, das ermöglicht, dass durch Hochfrequenz übermittelte Informationen durch ihn hindurchgehen.

10. Rahmen (22) nach Anspruch 9, wobei der Rahmen (22) aus Polyvinylchlorid besteht.

11. Verfahren zum Übermitteln von Informationen über ein bestimmtes Fenster oder eine bestimmte Tür, umfassend Bereitstellen eines Rahmens (22) mit einer daran befestigten Platte (30), Bereitstellen eines Tags (16) mit einem daran befestigten Smart-Chip (18), Bereitstellen des Tags (16) im Inneren des Rahmens (22), sodass es von der Außenseite des Rahmens (22) nicht sichtbar ist, und Übermitteln von Informationen in digitaler Form an den Smart-Chip (18) zur Speicherung darin und zum Zugriff darauf von der Außenseite des Rahmens (18) durch mehrere autorisierte Personen, **gekennzeichnet durch** Versehen der Außenseite des Rahmens (22) mit Positionszeichen (15), die von der Außenseite des Rahmens (22) sichtbar sind und allgemein benachbart zu dem verborgenen Smart-Chip (18) angeordnet sind, und Einbetten des Chips (18) in eine Tag-Aufnahmevertiefung (50) im Inneren des Rahmens (22) durch eine Öffnung in einem Kanal (44) des Rahmens (22) und Bewegen einer Glasleiste (40) in den Kanal (44), sodass ein Vorsprung (42) der Glasleiste (40) mechanisch in dem Kanal (44) befestigt wird und eine Dichtung (45) der Glasleiste (40) gegen das isolierte Fenster (30) anliegt.

12. Verfahren nach Anspruch 11, wobei die Informationen dem Chip (18) durch einen Hersteller von Fenstern oder Türen bereitgestellt werden und die Informationen für autorisierte Installateure und Endnutzer zugänglich sind.

13. Verfahren nach Anspruch 12, umfassend Gestatten des Zugriffs auf die gespeicherten Informationen des Smart-Chips (18) durch ein Mobiltelefon, das eine geeignete App aufweist.

14. Verfahren nach Anspruch 11, umfassend Verwenden des Verfahrens bei einem Fenster oder einer Tür mit einem extrudierten Rahmen (22).

15. Verfahren nach Anspruch 15, umfassend Verwenden des Verfahrens bei einem Fenster oder einer Tür mit einem PVC-Rahmen (22).

## Revendications

1. Cadre (22) pour une fenêtre ou une porte comprenant un panneau (30) assujetti audit cadre (22), une étiquette (16) pourvue d'une puce intelligente (18) qui lui est assujettie, ladite étiquette intelligente (16) étant dissimulée du regard depuis l'extérieur dudit cadre (22), ledit cadre (22) étant **caractérisé en ce qu'**il est pourvu d'une niche (50) de réception d'étiquette ménagée dans l'intérieur dudit cadre (22) et la puce intelligente (18) est placée dans ladite niche (50), et ledit cadre (22) est pourvu d'indications d'emplacement (15) visibles depuis l'extérieur de celui-ci et placées globalement au voisinage de ladite puce intelligente (18) dissimulée, le cadre (22) étant associé fonctionnellement à une parclose (40) et doté d'une gouttière (44) et la puce intelligente (18) étant positionnée dans la niche (50) de réception d'étiquette à travers une ouverture dans la gouttière (44) et étant sous-jacente à la parclose (40), la parclose (40) étant pourvue d'une protubérance (42) assujettie mécaniquement dans la gouttière (44) et étant pourvue d'un joint d'étanchéité (45) s'appuyant contre la fenêtre isolée (30).

2. Cadre (22) selon la revendication 1 prenant la forme d'un cadre (22) de fenêtre, et ledit panneau (30) étant pourvu d'au moins un carreau (30).

3. Cadre (22) selon la revendication 1, ladite puce intelligente (18) étant choisie dans le groupe comprenant une puce NFC et une puce RFID.

4. Cadre (22) selon la revendication 3, ladite puce (18) étant une puce NFC.

5. Cadre (22) selon la revendication 4, ladite puce NFC étant structurée de manière à recevoir et stocker des données pour qu'elles soient accessibles pour la récupération de données depuis une pluralité de sources.

6. Cadre (22) selon la revendication 5, ladite puce NFC étant structurée de manière à recevoir et stocker des données depuis un fabricant et permettre l'accès auxdites données par un installateur et un utilisateur final.

7. Cadre (22) selon la revendication 1, ledit cadre (22) prenant la forme d'un cadre de porte.

8. Cadre (22) selon la revendication 1, ledit cadre prenant la forme d'un cadre extrudé (22).

9. Cadre (22) selon la revendication 8, ledit cadre (22) étant composé d'un matériau laissant passer des informations diffusées par fréquence radio.

10. Cadre (22) selon la revendication 9, ledit cadre (22) étant composé de poly(chlorure de vinyle).

11. Procédé de diffusion d'informations concernant une fenêtre ou une porte particulière comprenant la fourniture d'un cadre (22) auquel est assujetti un panneau (30), la fourniture d'une étiquette (16) pourvue d'une puce intelligente (18) qui lui est assujettie, la fourniture de ladite étiquette (16) à l'intérieur dudit cadre (22) dissimulée du regard depuis l'extérieur dudit cadre (22), et la diffusion d'informations sous forme numérique vers ladite puce intelligente (18) pour les y stocker et permettre à une pluralité de personnes autorisées d'y avoir accès depuis l'extérieur dudit cadre (18), **caractérisé par** la fourniture, sur l'extérieur dudit cadre (22), d'indications d'emplacement (15) visibles depuis l'extérieur dudit cadre (22) et placées globalement au voisinage de ladite puce intelligente (18) dissimulée, et l'incorporation de la puce (18) dans une niche (50) de réception d'étiquette dans l'intérieur du cadre (22) par une ouverture dans une gouttière (44) du cadre (22) et l'introduction d'une parclose (40) dans la gouttière (44) de façon à ce qu'une protubérance (42) de la parclose (40) soit assujettie mécaniquement dans la gouttière (44) et qu'un joint d'étanchéité (45) de la parclose (40) s'appuie contre la fenêtre isolée (30).

12. Procédé selon la revendication 11, lesdites informations étant fournies à ladite puce (18) par un fabricant de fenêtres ou de portes, et lesdites informations étant accessibles à des installateurs et des utilisateurs finaux autorisés.

13. Procédé selon la revendication 12, comportant l'autorisation de l'accès auxdites informations stockées dans la puce intelligente (18) par un téléphone cellulaire pourvu d'une application appropriée.

14. Procédé selon la revendication 11, comportant l'utilisation dudit procédé avec une fenêtre ou une porte pourvue d'un cadre extrudé (22).

15. Procédé selon la revendication 15, comportant l'utilisation dudit procédé avec une fenêtre ou une porte pourvue d'un cadre en PVC (22).
